Europäisches Patentamt

European Patent Office

Office européen des brevets

(11) Numéro de publication: **0 207 859 B1**

# FASCICULE DE BREVET EUROPEEN

(45) Date de publication de fascicule du brevet: **18.03.92**

(51) Int. Cl.⁵: **G06F 15/332**, G01S 13/28

(21) Numéro de dépôt: **86401424.6**

(22) Date de dépôt: **27.06.86**

(54) **Dispositif de calcul d'une transformée de Fourier discrète, et glissante en application à un système radar.**

(30) Priorité: **28.06.85 FR 8509896**

(43) Date de publication de la demande:
**07.01.87 Bulletin 87/02**

(45) Mention de la délivrance du brevet:
**18.03.92 Bulletin 92/12**

(84) Etats contractants désignés:
**DE GB IT NL SE**

(56) Documents cités:
**DE-A- 2 732 643**
**US-A- 3 778 606**

**IEEE NATIONAL TELECOMMUNICATION CONFERENCE, San Diego, US, 2-4 décembre 1974, pages 263-265, IEEE, New York, US; G.M. DILLARD: "Recursive computation of the discrete Fourier transform with applications to an FSK communication receiver"**

(73) Titulaire: **THOMSON-CSF**
**51, Esplanade du Général de Gaulle**
**F-92800 Puteaux(FR)**

(72) Inventeur: **Elleaume, Philippe c/o Thomson CSF SCPI**
**19, avenue de Messine**
**F-75008 Paris(FR)**

(74) Mandataire: **Benoit, Monique et al**
**THOMSON-CSF SCPI**
**F-92045 PARIS LA DEFENSE CEDEX 67(FR)**

Rank Xerox (UK) Business Services

## Description

La présente invention a pour objet un dispositif de calcul d'une transformée de Fourier discrète et glissante, c'est-à-dire une transformée de Fourier discrète appliquée à un signal selon une fenêtre glissant dans le temps.

L'invention a également pour objet l'application de ce dispositif de calcul à un système radar.

Ainsi qu'il est connu, de nombreuses applications font appel au calcul de la transformée de Fourier et, parmi elles, les opérations de filtrage qu'on réalise dans un système radar sur le signal reçu. Par ailleurs, les évolutions technique et technologique actuelles conduisent de plus en plus à rechercher des solutions numériques pour ces traitements. Dans cette recherche, une des difficultés rencontrées est celle des puissances de calcul nécessaires. Ce problème est particulièrement aigü dans les applications comme les systèmes radars où les calculs doivent être faits en temps réel.

La présente invention a pour objet l'application d'un dispositif de calcul de transformée de Fourier discrète, sur une fenêtre temporelle glissante, permettant de minimiser la quantité d'opérations nécessaires, à la réalisation de la compression d'impulsions dans une chaîne de traitement de signal radar, telle que définie par la revendication 1.

La demande de brevet allemand 27 32 643 propose un dispositif et un procédé de calcul d'une transformée de Fourier discrète, et son application au filtrage doppler.

Le brevet US 3.778.606 décrit un autre procédé et un dispositif pour calculer des coefficients de transformée de Fourier discrète, pouvant être utilisé notamment pour le filtrage, la corrélation, la convolution ou l'analyse spectrale et applicable notamment dans le domaine du radar.

D'autres objets, particularités et résultats de l'invention ressortiront de la description suivante, donnée à titre d'exemple non limitatif et illustrée sur les dessins annexés, qui représentent :
- la figure 1, le schéma synoptique du dispositif de calcul selon l'invention ;
- la figure 2, le schéma d'une partie de la figure précédente ;
- la figure 3, un mode de réalisation de certains éléments de la figure précédente ;
- la figure 4, le schéma synoptique d'un récepteur radar et de la chaîne de traitement de signal y relatif ;
- la figure 5, un diagramme explicatif ;
- la figure 6, le schéma de l'application du dispositif selon l'invention à la compression d'impulsions dans une chaîne de traitement de signal radar.

Sur ces différentes figures, les mêmes références se rapportent aux mêmes éléments.

Avant de décrire dans le détail les figures montrant la réalisation du dispositif de calcul selon l'invention, on procède ci-après à quelques rappels sur la transformée de Fourier discrète.

On rappelle que la transformée de Fourier discrète, également connue sous les initiales DFT (pour "Discrete Fourier Transform"), permet de faire correspondre à N échantillons d'un signal x(t) variant dans le temps, un ensemble de N composantes fréquentielles $X_k$, avec k variant de 0 à N-1. Si on désigne par $x_n$ l'échantillon d'ordre n ($0 \le n \le N-1$) du signal x(t), l'échantillonnage étant effectué avec une période $\tau$ et sur une fenêtre temporelle de durée T, avec T = N.$\tau$, la correspondance est de la forme :

$$X_k = \sum_{n=0}^{N-1} x_n \cdot \exp\left\{-j.2\pi.\frac{k.n}{N}\right\} , \qquad (3)$$

la transformée inverse s'écrivant, ainsi qu'il est connu :

$$x_n = \frac{1}{N}.\sum_{k=0}^{N-1} X_k \cdot \exp\left\{+j.2\pi.\frac{k.n}{N}\right\} \qquad (4)$$

Lorsqu'on désire appliquer une telle transformée de Fourier à un signal x(t) sur une fenêtre temporelle de N points glissant dans le temps, on obtient pour les composantes X, pour une fenêtre d'indice $\underline{m}$, l'expression suivante :

2

$$X_k^m = \sum_{n=0}^{N-1} x_{m+n} \cdot \exp\left\{-j.2\pi \cdot \frac{k.n}{N}\right\} \qquad (5)$$

Il apparaît que le calcul de ces composantes nécessite de nombreuses opérations et, par suite, une puissance de calcul importante. Comme indiqué ci-dessus, le problème se pose de façon d'autant plus aiguë que dans certaines applications, comme les systèmes radar, ces calculs doivent être faits en temps réel.

Le calcul montre que les opérations nécessaires étaient pour partie redondantes et qu'on peut élaborer un algorithme de calcul qui minimise le nombre d'opérations nécessaires. Cet algorithme permet d'obtenir le terme

$$X_k^{m+1}$$

à partir de l'échantillon $x_m$ du signal et du terme précédemment calculé ($X_k^m$) de la façon suivante :

$$X_k^{m+1} = \{X_k^m + x_{m+N} - x_m\} \cdot \exp\left\{+j.2\pi \cdot \frac{k}{N}\right\} \qquad (6)$$

Démonstration

En partant de l'expression (5) ci-dessus et en l'appliquant à une fenêtre ayant glissé d'une période d'échantillonnage (fenêtre d'indice m + 1), on obtient :

$$X_k^{m+1} = \sum_{n=0}^{N-1} x_{m+1+n} \cdot \exp\left\{-j.2\pi \cdot \frac{k.n}{N}\right\}$$

On effectue le changement de variable suivant :

n' = n + 1

d'où :

$$X_k^{m+1} = \sum_{n'=1}^{N} x_{m+n'} \cdot \exp\left\{-j.2\pi \cdot \frac{k.(n'-1)}{N}\right\}$$

ou encore :

3

$$X_k^{m+1} = \left\{ \sum_{n'=1}^{N} x_{m+n'} \cdot \exp\left\{ -j.2\pi.\frac{k.n'}{N} \right\} \right\} \cdot \exp\left\{ +j.2\pi.\frac{k}{N} \right\}$$

$$= \left\{ \sum_{n'=0}^{N-1} x_{m+n'} \cdot \exp\left\{ -j.2\pi.\frac{k.n'}{N} \right\} - x_m \cdot \exp\left\{ -j.2\pi.\frac{k.0}{N} \right\} \right.$$

$$\left. + x_{m+N} \cdot \exp\left\{ -j.2\pi.\frac{k.N}{N} \right\} \right\} \cdot \exp\left\{ +j.2\pi.\frac{k}{N} \right\}$$

$$= \left\{ X_k^m + x_{m+N} - x_m \right\} \cdot \exp\left\{ +j.2\pi.\frac{k}{N} \right\}$$

ce qui est l'expression (6) ci-dessus et qui peut encore s'écrire :

$$X_k^{m+1} = \left\{ X_k^m + \delta_m \right\} \cdot \exp\left\{ +j.2\pi.\frac{k}{N} \right\} , \qquad (2)$$

ce qui est l'expression (2) ci-dessus, avec :

$\delta_m = x_{m+N} - x_m$ (expression (1) ci-dessus).     (1)

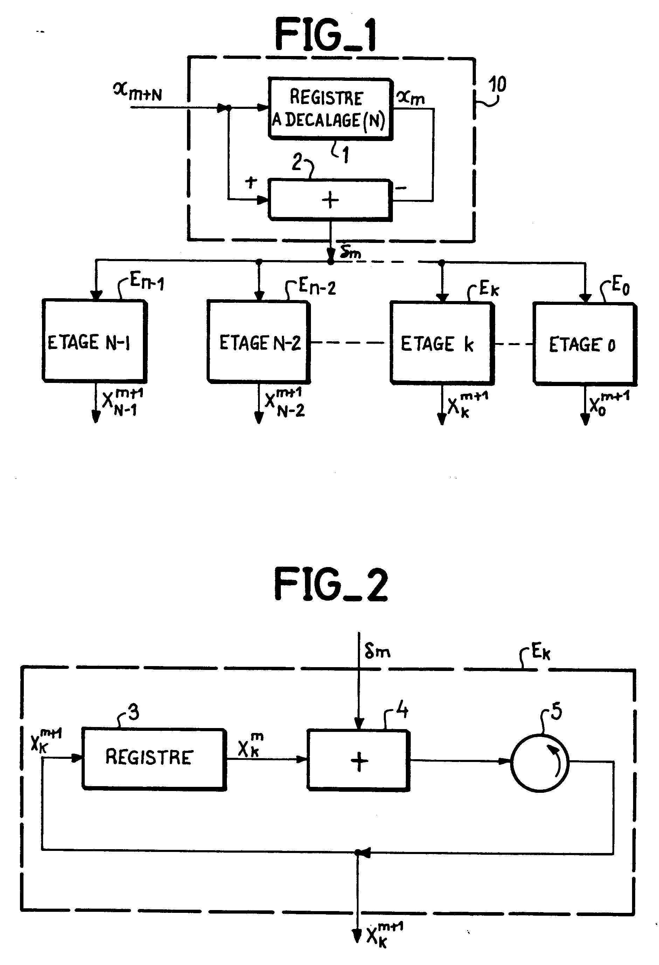

La figure 1 représente le schéma d'un dispositif permettant de calculer une transformée de Fourier discrète et glissante selon la formulation (6) ci-dessus.

Sur la figure 1, on trouve un premier ensemble 10 de circuits recevant un échantillon $x_{m+N}$ du signal x-(t) sur lequel on désire réaliser une transformation de Fourier et fournissant en sortie la quantité $\delta_m$ - (expression (1) ci-dessus). Cette quantité $\delta_m$ est fournie en parallèle à N étages identiques, repérés $E_0$ . . . $E_k$ . . . $E_{N-2}$, $E_{N-1}$, qui fournissent à leur tour la quantité

$$X_k^{m+1}$$

recherchée.

L'ensemble 10 est commun aux N étages du fait que l'expression $\delta_m$ est indépendante de l'ordre (k) de l'étage. Il est constitué par des moyens 1 conférant au signal d'entrée $x_{m+N}$ un retard égal à N périodes d'échantillonnage ; ces moyens de retard sont de préférence réalisés à l'aide d'un registre à décalage à N étages. Le signal de sortie du registre 1 est noté $x_m$. Le signal d'entrée et le signal de sortie du registre 1 sont soustraits dans un additionneur-soustracteur 2 pour fournir la quantité $\delta_m$.

Un tel dispositif de calcul peut être utilisé par exemple pour réaliser l'analyse spectrale d'un signal x(t) en en fournissant ses N composantes fréquentielles $X_k$.

Il est à noter qu'un tel dispositif peut ne comporter qu'un seul étage. Une application pratique en est par exemple la réalisation du filtre adapté à un nombre entier de périodes d'une sinusoïde de fréquence donnée, comme explicité ci-après.

Il est à noter également que lors de l'initialisation du dispositif, lorsqu'est reçu le premier échantillon $(x_0)$, tous les opérateurs et registres doivent être à zéro.

La figure 2 représente schématiquement la constitution de l'un des étages du dispositif de la figure 1, par exemple l'étage $E_k$.

L'étage $E_k$ comporte un additionneur 4, qui reçoit sur l'une de ses entrées la grandeur $\delta_m$ fournie par l'ensemble 10 précédent et sur l'autre de ses entrées la grandeur $X_k^m$ précédemment calculée, et qui adresse le résultat de l'addition à un opérateur de rotation complexe 5 ; ce dernier permet de multiplier le résultat de l'addition par la grandeur $\exp\left\{ +j.2\pi.\frac{k}{N} \right\}$ de l'expression (6). La sortie de l'opérateur 5,

4

$$5, \; X_k^{m+1},$$

constitue la grandeur de sortie de l'étage $E_k$ et elle est par ailleurs appliquée à l'entrée d'un dispositif 3, tel qu'un registre, permettant de mémoriser le résultat du calcul afin de fournir à l'étape suivante, où sera calculé

$$X_k^{m+2},$$

la grandeur précédemment élaborée.

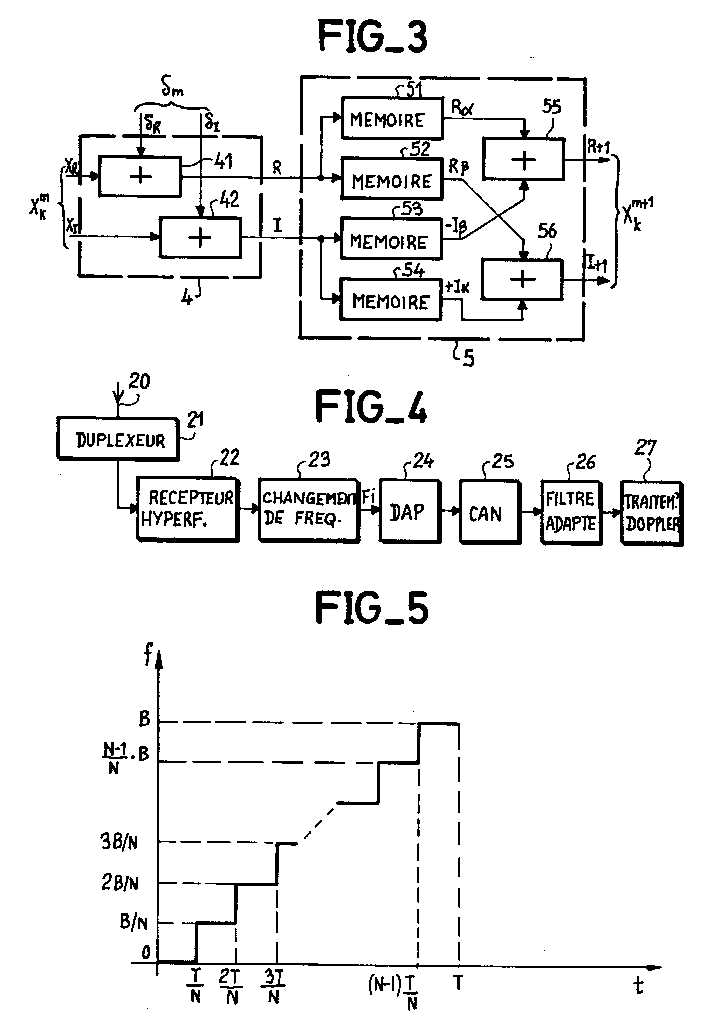

Il est à noter que sur les différentes figures (en dehors de la figure 4), les données fournies aux opérateurs et délivrées par ceux-ci sont des nombres complexes, exprimées sous la forme partie réelle-partie imaginaire, ces deux parties étant transmises en série ou en parallèle en fonction des performances recherchées.

La figure 3, représente un mode de réalisation des opérateurs 4 et 5 de la figure 2.

Les données $\delta_m$ et $X_k^m$ d'entrée de l'opérateur additionneur 4 sont représentées distinctement par leurs parties réelles et imaginaires, respectivement $\delta_R$ et $\delta_I$ pour $\delta_m$ et $X_R$ et $X_I$ pour $X_k^m$.

L'additionneur 4 comporte deux additionneurs élémentaires 41 et 42 opérant l'addition respectivement des parties réelles et des parties imaginaires des données $\delta_m$ et $X_k^m$. Les résultats des additions sont notés respectivement R et I et dirigés vers l'opérateur de rotation complexe 5.

Ainsi qu'il est connu, opérer une rotation complexe $\exp\{j.2\pi.\frac{k}{N}\}$ sur une grandeur complexe $R + j\,I$ revient à effectuer le produit :

$$(R + j\,I).(\alpha + j\beta),$$

si $\alpha$ et $\beta$ sont les parties réelle et imaginaire de l'expression $\exp\{j.2\pi.\frac{k}{N}\}$. Le développement du produit montre qu'il est équivalent à :

$$(R\alpha - I\beta) + j\,(R\beta + I\alpha)$$

Sur la figure 3, on a représenté l'opérateur 5 réalisant cette dernière opération.

Il comporte quatre tables 51-54, mémorisées par exemple dans des mémoires du type ROM, recevant les deux premières la donnée R et les deux dernières la donnée I. Ces mémoires fournissent les grandeurs $R\alpha$, $R\beta$, $-I\beta$ et $I\alpha$, respectivement. La première et la troisième de ces informations sont additionnées dans un additionneur 55 pour former la partie réelle $R + 1$ de la grandeur

$$X_k^{m+1}.$$

Les deuxième et quatrième de ces informations sont additionnées dans un additionneur 56 pour former la partie imaginaire $I + 1$ de la grandeur

$$X_k^{m+1}.$$

Dans une variante de réalisation, il est possible de n'utiliser que deux mémoires et un seul additionneur : celles-ci fournissent, sur commande extérieure, dans un premier temps, les grandeurs $R\alpha$ et $I\beta$ qui, additionnées, forment la partie réelle $R + 1$ ; dans un deuxième temps, les mémoires fournissent les deux autres grandeurs ($R\beta$ et $I\alpha$) qui sont additionnées à leur tour pour donner $I + 1$.

Il est à noter que cet exemple de réalisation ne nécessite pas de multiplieur. Bien entendu, d'autres réalisations sont possibles, notamment qui utilisent un multiplieur.

APPLICATION AU RADAR

Ainsi qu'il est dit ci-dessus, un dispositif de calcul tel que celui décrit sur la figure 1 peut être utilisé dans une chaîne de traitement radar pour constituer un filtre adapté.

On rappelle que le traitement optimal qu'on puisse faire subir à un signal dans le bruit est de le faire passer par un filtre "adapté" au signal, c'est-à-dire un filtre dont la transmittance est le conjugué du spectre dudit signal.

Par ailleurs, on rappelle que la compression d'impulsions est un procédé ayant pour but d'améliorer le pouvoir de résolution en distance d'un radar tout en permettant d'avoir une durée T grande de l'impulsion. Ce procédé consiste à disposer une ligne dispersive (en fréquence) sur la chaîne d'émission du radar, qui a pour effet d'allonger (ou de "dilater") le signal, et de compenser cet effet à la réception, c'est-à-dire de comprimer le signal reçu. En pratique, pour des raisons de résistance à l'effet Doppler, pour réaliser le signal "dilaté" on choisit souvent une rampe de fréquence, c'est-à-dire une modulation linéaire de fréquence. Le problème qui se pose alors à la réception est de réaliser un filtre qui soit adapté à la rampe de fréquence en question. C'est le problème qui est envisagé ci-après.

Enfin, lorsqu'on utilise des techniques numériques, on cherche souvent à réaliser une approximation de la rampe de fréquence telle qu'elle facilite l'opération de filtrage adapté réalisée ultérieurement. Une forme de cette approximation est connue sous le nom de code de Frank. On rappelle qu'on entend par "code" un signal dont les caractéristiques peuvent varier dans le temps, cette variation étant déterministe ou pseudo-aléatoire (connue de l'émetteur). On rappelle également que l'approximation de Frank s'écrit :

$$x(t) = \exp\{j.2\pi.f(t).t\}$$

où:

. $t \in [0;T[$;
. $f \in [0;B[$ et

$$f(t) = \frac{k(t)}{N} \cdot B \; ;$$

. B est la bande de fréquence du signal $x(t)$.

Le signal $x(t)$ se présente donc comme illustré figure 5 : une série de N marches d'escalier s'étendant dans le temps sur une durée T, chaque marche, ou palier, d'ordre 1 étant caractérisé par une fréquence $\frac{iB}{N}$ et une durée $\frac{T}{N}$.

On choisit, avec les notations précédentes :

$$BT = N^2$$
$$f_e = B \leftrightarrow \tau = \frac{1}{B} \; ,$$

ce qui conduit à avoir un nombre entier de sinusoïdes complexes par palier et les différents paliers se raccordent donc sans saut de phase. En outre, ayant N paliers, on a N échantillons par palier.

Il est connu de réaliser le filtrage adapté des codes de Frank à l'aide des algorithmes de transformée de Fourier rapide (FFT pour "Fast Fourier Transform" en anglais) en posant $N = 2^q$, ce qui conduit à :

$$B.T = (2^q)^2;$$

en effet, les algorithmes de FFT sont plus particulièrement adaptés aux puissances de 2.

Toutefois, dans ce cas, le nombre de taux de compression autorisés est limité (on rappelle que le taux de compression est donné par le produit B.T). Par exemple, pour N entier compris entre 1 et 16, les seuls taux de compression autorisés sont 1, , 16, et 256. Cela constitue un inconvénient principalement pour les deux raisons suivantes :

- le fait d'être limité à quelques valeurs précises du produit BT est gênant du fait que le choix de chacun des paramètres a et T n'est pas libre : la durée T est conditionnée par la puissance et la portée souhaitées pour le radar, alors que la bande de fréquence a est conditionnée par la résolution souhaitée;
- l'écart entre les différents taux de compression possibles est très grand pour les valeurs élevées du produit BT or, dans certaines applications (les radars multimodes), on souhaite faire varier ces paramètres de façon plus fine.

Selon l'invention, pour réaliser un filtre adapté à chaque palier, on utilise une DFT glissante telle que définie par l'expression (6) ci-dessus. En effet, on montre ci-après que la transformée de Fourier discrète et glissante est le filtre adapté à un signal formé d'un nombre entier de sinusoïdes complexes.

Démonstration

Soit un signal x(t) constitué d'un nombre entier de sinusoïdes complexes :

$$x(t) = \exp\{j.2\pi.f.t\}$$

avec :
- $t \in [0;T[$
- $f = k.\frac{1}{T}$

Si on choisit une fréquence d'échantillonnage $f_e$ telle que :

$$f_e = N.\frac{1}{T} \ (\text{avec } N > k_{max}),$$

on peut écrire le signal échantillonné x'(t) sous la forme :

$$x'(t) = \sum_{n=0}^{N-1} x_n \ . \ \delta(t-n\tau) \qquad (7)$$

où :
- $\delta$ est la fonction de Dirac
- $\tau$ est la période d'échantillonnage ($\tau = 1/f_e$)
- $x_n$ est le signal x(t) échantillonné à la $n^{ème}$ période ($\tau$) d'échantillonnage :

$$x_n = \exp\{j.2\pi.f.n.\tau\}$$

$$= \exp\{j.2\pi.\frac{k.n}{N}\} \qquad (8)$$

La transmittance H(f) du filtre adapté au signal échantillonné x'(t) est le complexe conjugué du spectre X'(f) de ce signal :

$$H(f) = \overline{X'(f)}$$

ou, dans le domaine temporel :

$$h(t) = \overline{x'(-t)}, \qquad (9)$$

h(t) étant la transformée de Fourier de la transmittance H(f). Des expressions (7), (8) et (9), on déduit :

$$h(t) = \sum_{n=0}^{N-1} \exp\{-j.2\pi.\frac{k.n}{N}\} \ . \ \delta(-t-n\tau) \qquad (10)$$

Si on applique un signal e(t) à un filtre dont la réponse est donnée par l'expression (10), on obtient en sortie du filtre un signal s(t) défini par :

$$s(t) = h(t) * e(t)$$

où le signe * représente un produit de convolution, c'est-à-dire que :

$$s(t) = \int_{-\infty}^{+\infty} e(t-u) \ . \ h(u) \ . \ du$$

En remplaçant dans cette dernière expression h(u) par sa valeur donnée par l'expression (10), on obtient :

$$s(t) = \sum_{n=0}^{N-1} \left\{ \int_{-\infty}^{+\infty} e(t-u) \cdot \delta(-u-n\tau) \cdot du \right\} \cdot \exp\left\{ - j.2\pi. \frac{k.n}{N} \right\}$$

$$= \sum_{n-0}^{N-1} e(t+n\tau) \cdot \exp\left\{ - j.2\pi. \frac{k.n}{N} \right\}$$

Si on considère seulement le signal de sortie après échantillonnage, c'est-à-dire $s(m\tau)$, noté $s_m$, on a :

$$s_m = \sum_{n=0}^{N-1} e_{m+n} \cdot \exp\left\{ - j.2\pi. \frac{k.n}{N} \right\}$$

Cette expression est de la même forme que l'expression (5) ci-dessus, c'est-à-dire que le signal de sortie (s) s'obtient en réalisant une DFT glissante sur le signal d'entrée (e).

Selon l'invention, on réalise donc une compression d'impulsions dans une chaîne radar à partir du dispositif décrit figure 1.

La figure 4 rappelle schématiquement la constitution d'une chaîne de réception et de traitement d'un signal radar à compression d'impulsion dans laquelle le dispositif selon l'invention est susceptible d'être inséré.

Le signal radar est reçu sur une antenne 20 et il est dirigé, par l'intermédiaire d'un duplexeur 21, à la partie réception du radar. Cette partie réception comporte principalement, en cascade :

- un récepteur hyperfréquence 22 ;
- un ensemble 23 de circuits de changement de fréquence, assurant la transposition du signal reçu en hyperfréquence en un signal en fréquence intermédiaire (FI) ;
- un dispositif 24 de démodulation d'amplitude et de phase (DAP) ;
- un convertisseur analogique-numérique (CAN) 25, assurant la numérisation du signal radar ;
- un filtre adapté 26 ;
- un ensemble 27 de circuits assurant, le cas échéant, les traitements Doppler.

Il est à noter que le filtre adapté 26 peut être éventuellement placé après les circuits de traitements Doppler 27 . Dans le même ordre d'idée, lorsque le démodulateur 24 est réalisé numériquement, il peut être placé à un endroit quelconque de la chaîne, bien entendu après le convertisseur 25.

Selon l'invention, le filtre adapté 26 est réalisé par un dispositif de calcul d'une transformée de Fourier discrète et glissante telle que définie par les équations (1) et (2), lorsque le signal émis est une rampe linéaire de fréquence dans lequel le produit BT est égal au carré d'un nombre entier ($N^2$), l'avantage de cette réalisation étant la possibilité de prendre un nombre N quelconque.

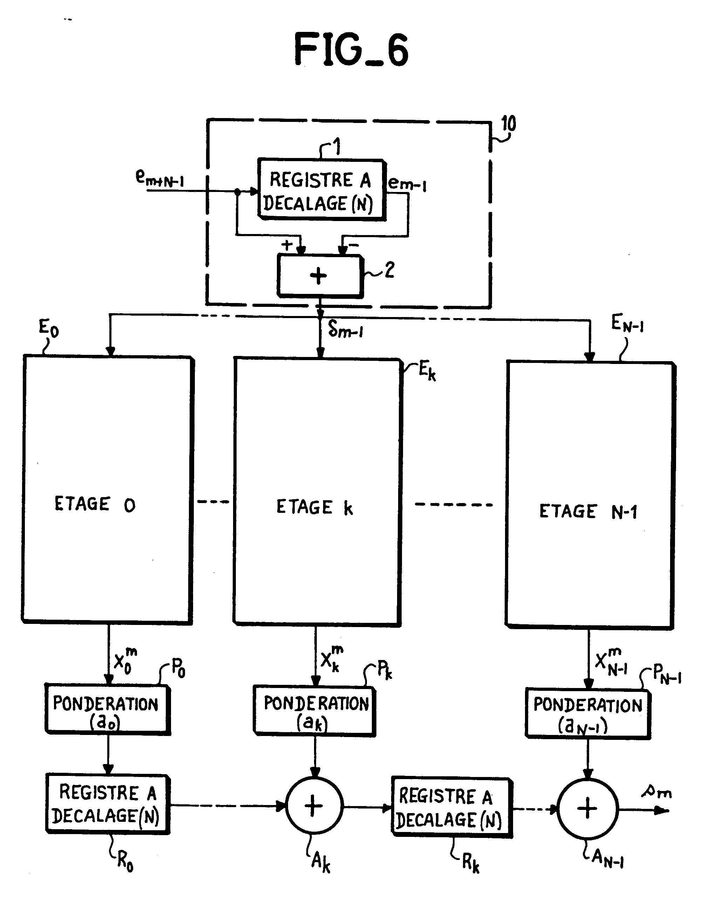

La figure 6 représente un mode de réalisation de ce filtre.

Sur cette figure, on retrouve l'ensemble 10, constitué de la même façon que sur la figure 1, commun à N étages $E_0 \ldots E_k \ldots E_{N-1}$. L'ensemble 10 reçoit, comme signal d'entrée, l'échantillon $e_{m+N-1}$ et fournit la quantité $\delta_{m-1}$ . L'étage $E_k$ (de rang k) fournit à sa sortie la quantité $X_k^m$ . Chacune des quantités $X_k^m$ est sommée (additionneur $A_k$) à la quantité précédente

$$(X_{k-1}^m)$$

après avoir subi un retard $R_k$ égal N périodes d'échantillonnage . Le circuit $R_k$ est réalisé par exemple à l'aide d'un registre à décalage à N étages ; la sommation est réalisée jusqu'au dernier étage ($E_{N-1}$) pour produire le signal de sortie $s_m$.

L'insertion d'un retard N au niveau de chaque étage est rendue nécessaire par le fait qu'avec le système de la figure 6, on calcule simultanément le premier point de chacun des N palliers, qui sont séparés les uns des autres par N périodes d'échantillonnage ; pour obtenir le signal $s_m$, il est donc

nécessaire d'effectuer une correction. Bien entendu, cette correction n'est nécessaire que dans le cas où les N palliers sont émis successivement. S'ils sont émis simultanément, les retards $R_k$ ne sont plus utiles.

En outre, dans le mode de réalisation représenté figure 6, un dispositif de pondération $P_k$ est interposé entre la sortie de l'étage $E_k$ et l'additionneur $A_k$. Il s'agit d'une pondération d'amplitude, optionnelle, dont l'objet est de baisser le niveau des lobes secondaires ; toutefois, elle engendre des pertes du fait qu'on s'écarte alors du filtre adapté théorique.

## Revendications

1. Dispositif pour réaliser un filtrage adapté et une compression d'impulsion dans un système radar comportant une chaîne de réception d'un signal radar, le signal radar, x (t), étant émis selon le codage de Frank, où x (t) = exp (j.$2\pi$.f.t), où $0 \leq t < T$ et $f = \frac{k}{T}$ .N, caractérisé par le fait que ce dispositif est réalisé à l'aide d'un dispositif de calcul d'une transformée de Fourier discrète et glissante sur une fenêtre temporelle de durée T, fournissant une pluralité (k) de composantes

$$(X_k^{m+1})$$

de ladite transformée à partir de N d'échantillons ($x_{m+N}$) d'un signal d'entrée, le dispositif comportant une pluralité de N étages ($E_0...E_{N-1}$) identiques, montés en parallèle, chaque étage étant relié à des premiers moyens (10), recevant les échantillons et comportant des deuxièmes moyens d'addition-soustraction (2) pour élaborer la quantité $\delta_m = x_{m+N} - x_m$ ;
chaque étage ($E_k$), recevant la quantité $\delta_m$ et élaborant la composante :

$$X_k^{m+1} = \{X_k^m + \delta_m\} \quad . \exp\{j.2\Pi. \frac{k}{N}\},$$

où k est l'indice de l'étage, $0 \leq k \leq$ N-1, et m, l'indice de la fenêtre, chaque étage comportant à cet effet des troisièmes moyens (4) additionnant la quantité $\delta_m$ à la composante $X_k^m$ précédemment calculée par l'étage ($E_k$), et des quatrièmes moyens (5) recevant le signal de sortie des troisièmes moyens et lui imposant une rotation complexe selon l'expression exp $\{j.2\pi. \frac{k}{N}\}$, la sortie de ces quatrièmes moyens constituant la sortie de l'étage ($E_k$) ;
et par le fait que la sortie

$$(X_k^{m+1})$$

de chaque étage ($E_k$) après avoir été affectée d'un retard ($R_k$) égal à N périodes d'échantillonnage est reliée à un sommateur ($A_k$) pour être sommée à la sortie

$$(X_{k+1}^m)$$

de l'étage suivant ($E_{k+1}$), la sommation étant réalisée jusqu'au dernier étage ($E_{N-1}$) pour produire le signal de sortie ($s_m$) du dispositif.

2. Système selon la revendication 1, caractérisé par le fait que les premiers moyens (10) comportent en outre des moyens de retard (1), recevant les échantillons ($X_{m+N}$) et leur conférant un retard T, les deuxièmes moyens d'addition-soustraction (2) élaborant la différence entre l'entrée et la sortie desdits moyens de retard (1), qui constitue la quantité $\delta_m = x_{m+N} - x_m$.

3. Système selon l'une des revendications précédentes, caractérisé par le fait que chacun des étages ($E_k$) comporte en outre des moyens de mémorisation (3) de la composante $X_k^m$ qu'il a calculée.

4. Système selon l'une des revendications précédentes, caractérisé par le fait que les quatrièmes moyens de rotation complexe comportent quatre mémoires, recevant la partie réelle ou la partie imaginaire de la composante à laquelle il faut faire subir la rotation complexe exp $\{j.2\pi.\frac{k}{N}\}$, et fournissant en sortie le produit de la grandeur qu'elles ont reçu en entrée par la partie réelle ou la partie imaginaire de l'exponnentielle ci-dessus, les sorties des mémoires étant sommées de façon à fournir la partie réelle et la partie imaginaire de la grandeur de sortie.

5. Système selon l'une des revendications précédentes, caractérisé par le fait que les sorties des différents étages comportent en outre des moyens de pondération en amplitude.

**Claims**

1. A device for performing an adapted filtering and a pulse compression in a radar system comprising a radar signal reception chain, the radar signal x(t) being transmitted according to the Franck encoding, wherein x(t) = exp $\{j.2\pi.f.t.\}$ with $0 \leq t \leq T$ and f = (k/T).N, characterized in that the device is implemented by means of a device for computing a discrete Fourier transform sliding across a time window having the duration T, and delivering a plurality (k) of terms

$$( X_k^{m+1} )$$

of said transform from N samples ($X_{m+N}$) of an input signal, the device including a plurality of N identical stages ($E_0 ... E_{N-1}$) connected in parallel, each stage being connected to first means (10) adapted to receive the samples and comprising second adding-subtracting means (2) for computing the quantity $\delta_m = x_{m+N} - x_m$;
each stage ($E_k$) receiving the quantity $\delta_m$ and computing the term

$$X_k^{m+1} = \{X_k^m + \delta_m\} \quad .\exp\{j.2\pi.\frac{k}{N}\},$$

wherein k is the index of the stage, $0 \leq k \leq N-1$ and m is the index of the window, with each stage including to this effect third means (4) serving to add the quantity $\delta_m$ to the quantity $X_k^m$ previously computed by the stage ($E_k$), and fourth means (5) serving to receive the output signal of the third means and imposing upon it a complex rotation according to the expression exp. $\{j2\pi k/N\}$, the output of said fourth means constituting the output of the stage ($E_k$),
and in that the output

$$( X_k^{m+1} )$$

of each stage ($E_k$) is fed to an adder ($A_k$) after having been subjected to a delay ($R_k$) equal to N sampling periods, for being added to the output

$$( X_{k+1}^m )$$

of the next following stage ($E_{k+1}$), with the adding being performed up to the last stage ($E_{N-1}$) in order to produce the output signal ($s_m$) of the device.

2. A system according to claim 1, characterized in that the first means (10) further include delay means (1) adapted to receive the samples ($x_{m+N}$) and to confer to them a delay T, the second adding-subtracting means (2) computing the difference between the input and the output of said delay means (1), which constitutes the quantity $\delta_m = x_{m+N} - x_m$.

3. A system according to any one of the preceding claims, characterized in that each stage ($E_k$) further includes storage means for storing the term $X_k^m$ computed by that stage.

4. A system according to any one of the preceding claims, characterized in that the fourth means for performing the complex rotation include four stores adapted to receive the real part or the imaginary part of the term to be subjected to the complex rotation exp. {j2πk/N}, and to provide at the output the product of the quantity which they received at the input by the real part or the imaginary part of the exponential expression cited above, the store outputs being added so as to deliver the real part and the imaginary part of the output quantity.

5. A system according to any one of the preceding claims, characterized in that the outputs of the different stages further include amplitude weighting means.

## Patentansprüche

1. Vorrichtung zum Durchführen einer angepaßten Filterung und einer Impulskompression in einem Radarsystem, mit einer Empfangskette für ein Radarsignal, wobei das Radarsignal x(t) im Franckcode mit x(t) = exp {j.2π.f.t.} gesendet wird, wobei gilt O ≤ t ≤ T sowie f = (k/T).N dadurch gekennzeichnet, daß die Einrichtung mit Hilfe einer Einrichtung zur Berechnung einer diskreten und über ein Zeitfenster der Dauer T gleitenden Fouriertransformierten verwirklicht wird, die eine Vielzahl (k) von Komponenten

$$( X_k^{m+1} )$$

der Transformierten ausgehend von N Tastproben $(x_{m+N})$ eines Eingangssignals liefert, wobei die Einrichtung eine Vielzahl N von identischen Stufen $(E_0...E_{N-1})$ enthält, die parallelgeschaltet sind, wobei jede Stufe an erste Mittel (10) angeschlossen ist, denen die Tastproben zugeführt werden, und zweite Mittel (2) zur Addition/Subtraktion und zur Berechnung der Größe $\delta_m = x_{m+N} - x_m$ aufweist; wobei jede Stufe $(E_k)$ die Größe $\delta_m$ empfängt und die Komponente

$$X_k^{m+1} = \{X_k^m + \delta_m\} \quad . \exp\{j.2\Pi.\frac{k}{N}\},$$

berechnet, wobei k der Index der Stufe mit 0 ≤ k ≤ N-1 ist, und m der Index des Fensters ist und wobei jede Stufe hierzu dritte Mittel (4), welche die Größe $\delta_m$ zur zuvor in der Stufe $E_k$ berechneten Komponente $X_k^m$ hinzuaddieren, und vierte Mittel (5) aufweist, welche das Ausgangssignal der dritten Mittel empfangen und es einer komplexen Rotation entsprechend dem Ausdruck exp. {j2π k/N} unterziehen, wobei der Ausgang der vierten Mittel den Ausgang der Stufe $(E_k)$ bildet; und daß das Ausgangssignal

$$( X_k^{m+1} )$$

jeder Stufe $(E_k)$ nach einer Verzögerung $(R_k)$ entsprechend N Tastprobenperioden an ein Summierglied $(A_k)$ geliefert wird, um zum Ausgangssignal

$$( X_{k+1}^m )$$

der nachfolgenden Stufe $(E_{k+1})$ hinzuaddiert zu werden, wobei die Summierung bis zur letzten Stufe $(E_{N-1})$ durchgeführt wird, um das Ausgangssignal $(s_m)$ der Einrichtung zu erzeugen.

2. System nach Anspruch 1, dadurch gekennzeichnet, daß die ersten Mittel (10) weiter Verzögerungsmittel (1) aufweisen, welche die Tastproben $(X_{m+N})$ empfangen und sie einer Verzögerung T zu unterwerfen, wobei die zweiten Mittel (2) zur Addition/Subtraktion die Differenz zwischen dem Eingangs- und dem Ausgangssignal der Verzögerungsmittel (1) berechnen, welche die Größe $\delta_m = x_{m+N} - x_m$ darstellt.

3. System nach einem der vorhergehenden Ansprüche, dadurch gekennzeichnet, daß jede Stufe $(E_k)$

weiter Speichermittel (3) zum Speichern der von ihr berechneten Komponenten $X_k^m$ aufweist.

4. System nach einem der vorhergehenden Ansprüche, dadurch gekennzeichnet, daß die vierten Mittel für die komplexe Rotation vier Speicher aufweisen, welche den Realteil oder den Imaginärteil der Komponente empfangen, die einer komplexen Rotation exp.$\{j.2\pi k/N\}$ unterzogen werden soll, und welche am Ausgang das Produkt der Größe liefern, die sie am Eingang in Form des Realteils oder des Imaginärteils des genannten Exponentialausdrucks empfangen haben, wobei die Ausgänge der Speicher derart summiert werden, daß sie den Realteil und den Imaginärteil der Ausgangsgröße liefern.

5. System nach einem der vorhergehenden Ansprüche, dadurch gekennzeichnet, daß die Ausgänge der verschiedenen Stufen weiter Amplitudengewichtungsmittel aufweisen.

EP 0 207 859 B1

# FIG_1

# FIG_2

13

# FIG_3

# FIG_4

# FIG_5

# FIG_6